(19) **Europäisches Patentamt / European Patent Office / Office européen des brevets**

(11) **EP 3 464 003 B1**

(12) **FASCICULE DE BREVET EUROPEEN**

(45) Date de publication et mention de la délivrance du brevet:
**01.07.2020 Bulletin 2020/27**

(21) Numéro de dépôt: **17731614.8**

(22) Date de dépôt: **23.05.2017**

(51) Int Cl.:
***B60W 30/12*** *(2020.01)*

(86) Numéro de dépôt international:
**PCT/FR2017/051273**

(87) Numéro de publication internationale:
**WO 2017/203159 (30.11.2017 Gazette 2017/48)**

(54) **DISPOSITIF DE CONTRÔLE DE TRAJECTOIRE D'UN VÉHICULE**

VORRICHTUNG ZUR STEUERUNG DES WEGES EINES FAHRZEUGS

DEVICE FOR CONTROLLING THE PATH OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2016 FR 1654617**

(43) Date de publication de la demande:
**10.04.2019 Bulletin 2019/15**

(73) Titulaire: **Renault S.A.S.**
**92100 Boulogne-Billancourt (FR)**

(72) Inventeurs:
• **BALLESTEROS-TOLOSANA, Iris**
**91400 Orsay (FR)**
• **DEBORNE, Renaud**
**78150 Le Chesnay (FR)**
• **DAVINS VALLDAURA, Joan**
**75007 Paris (FR)**
• **GOEFFRIAULT, Maud**
**91300 Massy (FR)**

(56) Documents cités:
| | |
|---|---|
| EP-A2- 1 661 793 | WO-A1-2010/053408 |
| WO-A1-2013/107978 | WO-A1-2013/107978 |
| WO-A1-2014/006327 | WO-A1-2014/006327 |
| JP-A- H1 191 609 | JP-B2- 3 740 787 |

**Description**

Les travaux menant à la présente invention ont bénéficié d'un soutien financier du Fonds de recherche du charbon et de l'acier de la Communauté européenne en vertu de la *convention de subvention* n° 607957.

L'invention concerne de manière générale un dispositif de contrôle en temps réel de trajectoire de véhicule. L'invention concerne plus précisément un dispositif de contrôle latéral pour générer en temps réel une commande de braquage d'un véhicule, notamment d'un véhicule automobile autonome ou à conduite partiellement déléguée, c'est-à-dire d'un véhicule pouvant se déplacer totalement ou partiellement sans conducteur humain.

Les dispositifs ou systèmes de contrôle en temps réel de trajectoire d'état sont déjà connus dans de nombreux domaines techniques, y compris dans celui de l'automobile.

Par exemple le brevet EP1074903B1 divulgue un système pour suivre une voie avec détection de marquage de la voie. Un module d'action en chaîne directe produit un terme de conduite de direction basé sur une position de ligne cible à partir d'un processeur graphique. Les éléments divulgués laissent envisager une application de ce système à une voie rectiligne, voire avec des virages à faible courbure sans influence notable sur la dynamique du véhicule. Une application sur une voie avec des virages à forte courbure, comme on peut en rencontrer par exemple sur des routes de montagne peut poser un problème de réactivité dynamique du véhicule pour se maintenir avec souplesse dans la voie.

Par exemple encore le brevet US8751089B2 divulgue un système de commande de suivi de trajectoire pour unité mobile. Le système commande une unité mobile pour suivre un trajet cible décrit par des courbes de forme libre. Si ce type de système peut convenir pour piloter un robot dans un espace sans contrainte de nature à empêcher la liberté de forme des courbes qui conviennent à un trajet cible, il peut poser des problèmes pour un véhicule autonome dont le pilotage ne consiste pas à lui faire suivre un trajet cible mais à le maintenir dans une voie de circulation, quelque soient la forme des courbes imposées par la géométrie de la voie.

Le document WO2014/006327 divulgue un dispositif comprenant un module d'élaboration en temps réel d'une consigne d'action stabilisante applicable à un véhicule en minimisant des carrés d'écarts de trajectoire déduits du vecteur d'état.

L'invention a pour objectif de répondre aux problèmes posés par l'état antérieur de la technique, notamment en termes d'efficacité, de réactivité et de facilité de mise en œuvre.

Pour atteindre cet objectif, l'invention a pour objet un dispositif de contrôle en temps réel de trajectoire d'un véhicule comprenant un module observateur qui génère en temps réel à partir d'un vecteur de mesure actuelle un vecteur d'état estimé de suivi de voie du véhicule se déplaçant à une vitesse actuelle, de façon à produire une première commande de braquage pour stabiliser la trajectoire du véhicule par rapport à la voie. Le dispositif est remarquable en ce qu'il comprend un module anticipateur qui ajoute à la première commande de braquage une deuxième commande de braquage qui est fonction d'un rayon de courbure à appliquer à la trajectoire.

Ainsi, aussi élevé que soit la courbure imposée par la voie, bien entendu dans les limites habituellement fixées par les réglementations en vigueur, le dispositif permet au véhicule de négocier confortablement de nombreuses courbes imposées par la nature de la voie de circulation.

Avantageusement la courbure est l'inverse d'un rayon de courbure de voie à une distance en avant du véhicule.

De préférence, ladite distance varie en fonction de ladite vitesse actuelle du véhicule.

Particulièrement, le dispositif comporte un appareil combinant les propriétés d'une caméra optique et d'un radar pour fournir au moins une géométrie de ligne directrice de la voie sous forme d'un polynôme.

Plus particulièrement, le module anticipateur comprend un sous-module de calcul de courbure à partir de la géométrie de ligne directrice médiane de la voie au moyen d'une formule s'exprimant sous forme d'un rapport comportant au numérateur une dérivée seconde du polynôme et au dénominateur une racine carrée d'une expression élevée au cube du carré de la dérivée première du polynôme augmenté d'une unité.

Particulièrement aussi, le module anticipateur comprend un sous-module de calcul de la deuxième commande de braquage comme solution des équations de la dynamique donnant un vecteur d'état stable ou à dérivée temporelle nulle.

Plus particulièrement, le module anticipateur génère un vecteur de mesure évaluée pour ledit vecteur d'état stable de manière à retirer ledit vecteur de mesure évaluée dudit vecteur de mesure actuelle en entrée du module observateur.

Plus particulièrement aussi, le sous-module de calcul comprend de plus un gain ajustable de la deuxième commande de braquage.

Particulièrement encore, le vecteur de mesure actuelle comprend des coordonnées relatives à une vitesse de lacet et à un angle de braquage et le vecteur d'état estimé comprend des coordonnées relatives à la vitesse de lacet, à un angle d'écart relatif à une trajectoire du véhicule, à une dérivée temporelle d'angle de braquage et à l'angle de braquage.

Plus particulièrement, pour se caler sur la voie de chaussée, le vecteur de mesure actuelle comprend de plus des coordonnées relatives à l'angle d'écart relatif à la trajectoire du véhicule, à l'écart latéral à la trajectoire du véhicule de suivi de voie et à l'opposé de l'intégrale temporelle d'écart latéral à la trajectoire, et le vecteur d'état estimé comprend de plus des coordonnées relatives à une dérivée temporelle d'écart latéral à la trajectoire du véhicule, à l'écart latéral à la trajectoire du véhicule, et à l'opposé de l'intégrale temporelle d'écart latéral à la trajectoire.

D'autres caractéristiques et avantages apparaîtront à la lecture de la description qui suit, en référence aux dessins annexés dans lesquels :

- la figure 1 représente un véhicule auquel l'invention est applicable,
- la figure 2 est un schéma de mise en œuvre du dispositif conforme à l'invention.

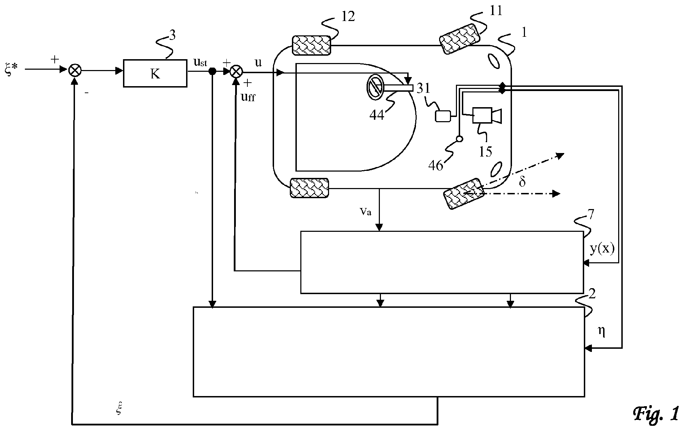

En référence à la figure 1, un véhicule 1 automobile, à traction entrainé par un moteur (non représenté sur les figures), comporte quatre roues comprenant deux roues avant 11 qui sont de préférence les roues directrices, et deux roues arrière 12. Chaque roue est équipée ou non respectivement d'un capteur de vitesse instantanée permettant de connaître une vitesse actuelle $v_a$ du véhicule, notamment une vitesse actuelle $v_a$ longitudinale du véhicule.

Le véhicule 1 comporte une colonne de direction 44 dont la partie haute est équipée ou non d'un volant, ce dernier devenant inutile pour un véhicule purement autonome, et dont la partie basse agit sur un organe de direction qui permet d'orienter les roues avant. La colonne de direction 44 est équipée d'un actionneur piloté par un signal de commande u. L'organe de direction est équipé d'un capteur 46 à la base de la colonne de direction ou à tout autre endroit, par exemple d'une crémaillère agissant sur les roues avant, pour mesurer un angle de braquage $\delta$ effectif des roues avant du véhicule. Le capteur 46 est par exemple un capteur de couple dont la valeur est aisément convertie en angle de braquage.

Le véhicule 1 comporte également un capteur 31 de la vitesse de lacet $\psi = \partial\Psi/\partial t$ du véhicule, c'est-à-dire de la vitesse de rotation du véhicule autour de son centre de gravité suivant un axe perpendiculaire au plan de la chaussée sur laquelle circule le véhicule. Le capteur 31 est par exemple un gyromètre situé très proche du centre de gravité (CoG pour center of gravity en anglais) du véhicule. Un appareil 15 de type RaCam, c'est-à-dire combinant les propriétés d'une caméra optique et d'un radar, permet de mesurer des coordonnées d'objets $Y_{CAM}$ transversales à un axe médian du véhicule et $X_{CAM}$ selon l'axe médian vers l'avant du véhicule 1.

Telle que connue par ailleurs du fournisseur de l'appareil 15, une fusion des mesures optiques et des mesures radar, permet de détecter pour chaque point de marquage sur la chaussée, la distance x de ce point par rapport à la face avant de l'appareil 15 selon son axe de vision et la distance y de ce même point par rapport à l'axe de vision. Un traitement d'image, hors du cadre de la présente invention, permet à l'appareil 15 de fournir une géométrie y(x) d'au moins une ligne directrice de la voie de circulation du véhicule sous forme d'un polynôme, par exemple de la ligne de délimitation à gauche et de la ligne de délimitation à droite de la voie ou de la ligne médiane de la voie au centre des deux lignes de délimitation. Pour une ligne directrice donnée, le polynôme a par exemple la forme suivante :

$$y = p_3 \cdot x^3 + p_2 \cdot x^2 + p_1 \cdot x + p_0.$$

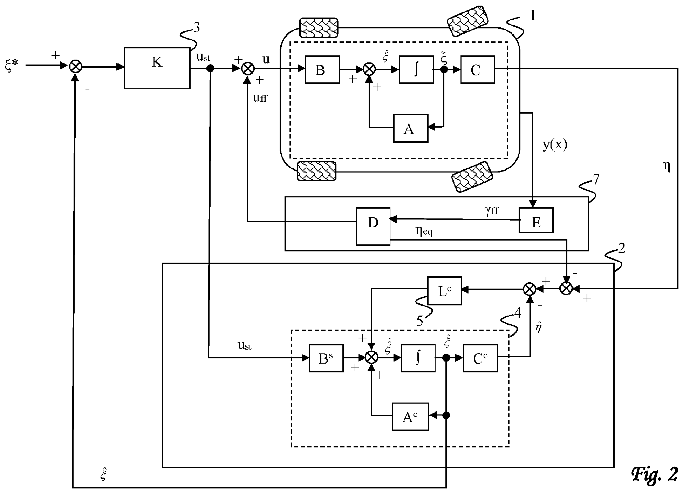

Le véhicule 1 est équipé de manière connue en soi d'un calculateur embarqué (non représenté en tant que tel) permettant de contrôler et de commander différents organes du véhicule. Le calculateur peut recevoir par des connexions, notamment via un bus CAN, Lin ou Ethernet automobile, des informations en provenance des capteurs de vitesse longitudinale, du capteur 31 de vitesse de lacet, du capteur 46 de l'angle de braquage $\delta$ et de l'appareil 15. Le calculateur embarqué peut aussi commander la colonne de direction 44 en lui communiquant le signal de commande u. Le calculateur embarqué peut héberger en outre, un dispositif contrôleur 3 pour générer un signal de commande $u_{st}$ de façon à rendre conforme un vecteur d'état physique $\xi$ du véhicule à un vecteur d'état de consigne $\xi^*$ pour assurer un suivi de trajectoire souhaitée par le véhicule 1. L'état physique du véhicule dépend de nombreuses données physiques plus ou moins bien maîtrisées qui agissent sur son comportement dynamique. Le calculateur embarqué héberge un dispositif observateur 2 pour générer en temps réel un vecteur d'état estimé $\hat{\xi}$, de suivi de trajectoire du véhicule 1 se déplaçant à la vitesse $v_a$ actuelle, à partir de la commande $u_{st}$ et d'un vecteur de mesure actuelle $\eta$ corrélée au vecteur d'état physique $\xi$ de suivi de trajectoire du véhicule 1, comme expliqué à présent en référence à la figure 2.

Dans le mode de réalisation illustré par la figure 2, on considère un vecteur d'état $\xi$ effectif du véhicule 1 comprenant plus de deux coordonnées scalaires, ou variables d'état, parmi lesquelles on peut citer par exemple dans un ordre préétabli quelconque mais préférentiellement de manière définitive pour un véhicule donné, une vitesse de lacet effective $\dot{\psi}_{ef} = \partial\Psi/\partial t$ du véhicule, un angle $\Psi_{rel,ef}$ d'écart relatif effectif du véhicule à sa trajectoire idéale et une vitesse latérale effective $\dot{Y}_{CoG,ef} = \partial Y_{CoG}/\partial t$ d'éloignement du centre de gravité du véhicule par rapport à sa trajectoire idéale. L'angle $\Psi_{rel,ef}$ d'écart relatif effectif est l'angle que fait effectivement l'axe médian du véhicule avec la tangente à la trajectoire idéale à chaque instant considéré. La vitesse latérale effective $\dot{Y}_{CoG,ef} = \partial Y_{CoG}/\partial t$ d'éloignement du centre de gravité est la vitesse à laquelle le centre de gravité du véhicule s'éloigne effectivement de la trajectoire idéale, perpendiculaire à la tangente à la trajectoire idéale à l'instant considéré. Le vecteur d'état $\xi$ effectif du véhicule 1 peut comprendre d'autres coordonnées scalaires comme par exemple l'éloignement effectif $Y_{cog,ef}$ du centre de gravité du véhicule par rapport à sa trajectoire idéale, la variation effective $\dot{\delta}_{ef} = \partial \delta/\partial t$ d'angle de braquage des roues du véhicule au cours du temps, et l'angle de braquage effectif $\delta_{ef}$ des roues.

Les variables d'état peuvent avoir une signification indépendante du mode dans lequel fonctionne le véhicule ou une signification propre au mode dans lequel fonctionne le véhicule. La vitesse de lacet qui est la vitesse avec laquelle le véhicule pivote autour d'un axe perpendiculaire au plan de la chaussée, est indépendante du mode de fonctionnement. Il en est de même de la variation effective $\dot{\delta}_{ef} = \partial \delta/\partial t$ d'angle de braquage des roues du véhicule au cours du temps, et de l'angle de braquage effectif $\delta_{ef}$ des roues car ces variables sont liées à l'état des roues elles-mêmes par rapport au châssis du véhicule asservi. Par contre l'éloignement effectif $Y_{cog,ef}$ du centre de gravité du véhicule asservi par rapport à sa trajectoire idéale est l'écart latéral entre la ligne directrice de la voie et le centre de gravité du véhicule asservi sur l'axe perpendiculaire à l'axe du véhicule en mode LCA. La vitesse latérale effective $\dot{Y}_{CoG,ef} = \partial Y_{CoG}/\partial t$ d'éloignement du centre de gravité est la variation temporelle de la variable précédente.

Le vecteur d'état $\xi$ effectif du véhicule 1 peut aussi comprendre des coordonnées scalaires différentes en nombre et/ou en nature selon le mode de fonctionnement du véhicule. En reprenant l'exemple illustratif ci-dessus, une variable d'état facultative $\int -Y_{COG}dt$ peut représenter une intégrale temporelle des écarts du centre de gravité du véhicule asservi par rapport au point de la ligne directrice de la voie sur lequel il devrait être. En fait cette variable d'état ne correspond à aucun état physique réel, elle est plutôt un artifice hérité des asservissements en boucle fermés de type PID, dans lesquels la composante intégrale du gain permet d'obtenir une sortie non nulle de l'amplificateur pour une erreur nulle appliquée à son entrée, avec pour effet technique d'imposer une erreur nulle, ici sur l'éloignement effectif $Y_{cog,ef}$ du centre de gravité du véhicule par rapport à la ligne médiane de la voie de circulation.

A ce vecteur $\xi$ d'état effectif du véhicule 1 correspond un vecteur $\xi^*$ d'état de référence que l'on souhaite être atteint à chaque instant de roulage du véhicule asservi. Par exemple aux coordonnées $\dot{\psi}_{ef}$, $\Psi_{rel,ef}$, $\dot{Y}_{CoG,ef}$, $Y_{CoG,ef}$ du vecteur d'état $\xi$ correspondent des coordonnées $\dot{\psi}_{ref}$, $\Psi_{ref}$, $\dot{Y}_{CoG,ref}$, $Y_{CoG,ref}$ du vecteur d'état $\xi^*$ de valeurs nulles car on souhaite bien entendu une absence d'écart entre la trajectoire effective du véhicule asservi et sa trajectoire idéale.

Le vecteur $\xi$ d'état effectif du véhicule 1 est inconnu car l'état interne du véhicule asservi, régi par les lois naturelles de la physique, est inaccessible dans sa totalité.

On rappelle que les lois connues de la physique posent qu'un vecteur $\dot{\xi}$ d'évolution temporelle du vecteur $\xi$ d'état du système physique constitué par le véhicule 1, est lié au vecteur $\xi$ d'état par une relation dynamique A qui, en absence de perturbation extérieure, tend généralement à amener l'état du véhicule à un état final stable. L'état final stable du véhicule n'étant pas nécessairement celui que l'on cherche à atteindre, le but de l'invention est de produire une commande u qui perturbe en permanence le système pour maintenir le vecteur $\xi$ d'état effectif conforme au vecteur $\xi^*$ d'état de référence. La perturbation ainsi provoquée sur le vecteur $\dot{\xi}$ d'évolution temporelle, est liée à la commande u par une relation invasive B, elle aussi régie par les lois de la physique. D'autres perturbations extérieures, de nature globalement inconnues, agissant aussi sur le système physique constitué par le véhicule 1, on emploi un mécanisme d'asservissement à contre-réaction dans lequel le dispositif observateur 2 a pour but de générer en temps réel un vecteur $\hat{\xi}$ d'état estimé représentant le plus fidèlement possible le vecteur $\xi$ d'état effectif.

Pour atteindre son but, le dispositif observateur 2 comprend un module 4 qui modélise le système physique constitué par le véhicule 1, notamment en termes de suivi de trajectoire. Le module 4 comporte une matrice numérique calculée $A^c$ représentative de la relation dynamique A et une matrice numérique $B^s$ représentative de la relation invasive B.

La matrice numérique $A^c$ peut avoir différentes formes, chacune adaptée à un mode de fonctionnement du véhicule. La forme de la matrice numérique $A^c$ est essentiellement liée au vecteur $\xi$ d'état du véhicule 1 et à la relation dynamique appliquée. L'exemple de forme exposé ci-dessous, se base sur le modèle bicyclette bien connu dans le domaine technique considéré, comme l'illustrent de nombreux documents antérieurs tels que FR2925005 ou WO2012084465.

L'exemple considéré ici est celui du mode LCA, pour lequel la matrice numérique $A^c$ a la forme suivante :

$$A^c = \begin{pmatrix} a_{11}(v) & a_{12} & a_{13}(v) & 0 & 0 & a_{16} & 0 \\ 1 & 0 & 0 & 0 & 0 & 0 & 0 \\ a_{31}(v) & a_{32} & a_{33}(v) & 0 & 0 & a_{36} & 0 \\ 0 & 0 & 1 & 0 & 0 & 0 & 0 \\ 0 & 0 & 0 & 0 & a_{55} & a_{56} & 0 \\ 0 & 0 & 0 & 0 & 1 & 0 & 0 \\ 0 & 0 & 0 & -1 & 0 & 0 & 0 \end{pmatrix}$$

Dans laquelle certains coefficients sont variables et d'autres sont constants au cours d'une même séquence de roulage.

Les coefficients variables sont essentiellement ceux qui dépendent d'une vitesse $v$, notamment de la vitesse $v_a$ longitudinale du véhicule. Pour s'adapter aux variations de vitesse, les coefficients variables sont recalculés en temps réel en lisant d'une part la vitesse $v$, notamment la vitesse $v_a$ longitudinale généralement accessible sur le réseau embarqué (type Bus CAN, LIN, Ethernet automobile ou autre) et d'autre part des paramètres généralement accessibles en mémoire, au moyen des formules suivantes :

$$a_{11}(v) = \frac{-(c_r l_r^2 + c_f l_f^2)}{I_z v_a}$$

$$a_{13}(v) = \frac{(c_r l_r - c_f l_f)}{I_z v_a}$$

$$a_{31}(v) = \frac{(c_r l_r - c_f l_f)}{M v_a}$$

$$a_{33}(v) = \frac{-(c_r + c_f)}{M v_a}$$

Dans lesquelles les paramètres $c_r$, $c_f$, $l_r$, $l_f$, $I_z$, M quantifient de manière connue en soi par ailleurs (cf. applications FR1255068, FR1255188, ou FR12563339) chacun respectivement la rigidité de dérive des roues arrières 12 et la rigidité de dérive des roues avant 11 obtenues auprès du fournisseur de pneumatique des roues ou au moyen d'essais de roulage sur circuit, la distance de l'axe des roues arrière et la distance de l'axe des roues avant par rapport au centre de gravité CoG du véhicule 1, le moment d'inertie du véhicule autour de la perpendiculaire au plan passant par les axes de roues avant et arrière, et enfin la masse du véhicule.

Les coefficients constants au cours d'une séquence de roulage peuvent être précalculés lors de la conception du véhicule puis stockés en mémoire de calculateur embarqué. Ils sont déterminés par les formules suivantes :

$$a_{12} = \frac{(c_f l_f - c_r l_r)}{I_z}$$

$$a_{16} = \frac{c_f l_f}{I_z}$$

$$a_{32} = \frac{(c_f + c_r)}{M}$$

$$a_{36} = \frac{c_f}{M}$$

$$a_{55} = -2\mu\omega$$

$$a_{56} = -\omega^2$$

Dans lesquelles d'une part $\mu$ et $\omega$ désignent respectivement un coefficient d'amortissement et une pulsation propre de la fonction de transfert de la commande de braquage des roues.

Les coefficients constants au cours d'une séquence de roulage peuvent aussi être calculés à chaque démarrage du véhicule pour tenir compte d'une masse M et d'un moment d'inertie $I_z$ qui peut être différent à chaque démarrage en fonction du nombre de passagers et du chargement. Les variations de ces paramètres, par exemple provoquées par la consommation de carburant ou un passager descendant du véhicule en cours de route, sont généralement peu significatives.

Les coefficients unitaires existent sur la ligne correspondant à la dérivée temporelle d'une variable d'état qui est elle-même une variable d'état de rang égal à celui de la colonne de la matrice.

Les autres coefficients sont nuls, à l'exception de la dernière colonne où ils sont tous nuls et de la dernière ligne où seul le coefficient médian n'est pas nul mais égal à -1 pour reproduire artificiellement une contre réaction d'asservissement linéaire classique type PID.

Le nombre de colonnes de la matrice est égal au nombre de coordonnées du vecteur d'état et le nombre de lignes est égal au nombre de coordonnées du vecteur de variation temporelle d'état, c'est-à-dire égal au nombre de lignes. On comprendra que la matrice numérique $A^c$ peut comporter des nombres de lignes et de colonnes différents de ceux des exemples ci-dessus, notamment supérieur si le besoin se fait ressentir de considérer une variable d'état supplémentaire ou inférieure si on considère inutile une variable d'état, notamment la variable d'état correspondant à la dernière ligne comme expliqué ci-dessus.

La matrice numérique $B^s$ représentative de la relation invasive B, est adaptée au mode de commande du véhicule et de prise en compte de facteurs extérieurs. La forme de la matrice numérique $B^s$ est essentiellement liée au vecteur $\eta$ d'état dont le nombre de coordonnées fixe le nombre de lignes et aux interactions avec le système dont le nombre fixe le nombre de colonnes. L'exemple principal de forme exposé ci-dessous, correspond à l'exemple exposé ci-dessus.

Pour le mode LCA, la matrice numérique $B^s$ a la forme suivante :

$$B^s = \begin{pmatrix} 0 & 0 \\ 0 & -v_a \\ 0 & -v_a^2 \\ 0 & 0 \\ b_{51} & 0 \\ 0 & 0 \\ 0 & 0 \end{pmatrix}$$

Dans laquelle la première colonne est ici associée à la première perturbation qui est la commande u de braquage alors que la deuxième colonne est associée à une deuxième perturbation qui est la courbure $\gamma_{ref}$ égale à l'inverse du rayon de courbure $\rho_{ref}$ de la voie de circulation lui-même à l'endroit où se trouve le véhicule. Le coefficient $b_{51}$ est ici encore égal au carré de la pulsation propre $\omega$ de la fonction de transfert de la commande de braquage des roues. Dans la deuxième colonne par contre, deux coefficients $b_{22}$ et $b_{32}$ sont non nuls en considérant que la courbure $\gamma_{ref}$ agit directement sur l'angle $\Psi_{rel,ef}$ d'écart relatif effectif du véhicule à sa trajectoire idéale et sur la vitesse latérale effective

$$\dot{Y}_{CoG,ef} = \frac{\partial Y_{CoG}}{\partial t}$$

d'éloignement du centre de gravité du véhicule par rapport à sa trajectoire idéale. Le coefficient $b_{22}$ est égal à l'opposé de la vitesse longitudinale $v_a$ de véhicule et le coefficient $b_{32}$ est égal à l'opposé du carré de la vitesse longitudinale $v_a$ de véhicule.

Pour modéliser le véhicule 1, le module 4 reçoit la commande $u_{st}$ de façon à générer le vecteur $\hat{\xi}$ d'état estimé en reproduisant les équations de la dynamique au moyen des matrices numériques $A^c$ et $B^s$ intervenant dans les formules :

$$\hat{\xi} = \int \dot{\hat{\xi}}$$

$$\dot{\hat{\xi}} = A^c \hat{\xi} + B^s u_{st}$$

Plusieurs conditions devraient être satisfaites pour que le vecteur $\hat{\xi}$ d'état estimé reproduise fidèlement le vecteur $\xi$ d'état physique du véhicule.

Dans la première formule qui est une intégrale par rapport au temps, il faudrait qu'à un instant initial, le vecteur $\hat{\xi}$ d'état estimé soit égal au vecteur $\xi$ d'état physique du véhicule.

Dans la seconde formule, il faudrait que les matrices numériques $A^c$ et $B^s$ modélisent parfaitement la relation dynamique A et la relation invasive B qui impactent réellement le véhicule.

On conçoit bien que ces conditions ne peuvent pas être satisfaites pour de nombreux motifs tels que l'exactitude des paramètres qui qualifient le véhicule alors qu'ils sont soumis aux dispersions de fabrication et au vieillissement d'usage, les perturbations imprévues et bien d'autres motifs connus ou inconnus.

Pour réduire l'écart entre le vecteur $\hat{\xi}$ d'état estimé qui est calculé, et le vecteur $\xi$ d'état physique du véhicule qui est inconnu, l'observateur 2 reçoit sur une deuxième entrée, un vecteur $\eta$ de mesures actuelles qui sont représentatives de l'état du véhicule. Le vecteur $\eta$ de mesures actuelles est corrélé au vecteur $\xi$ d'état physique par une relation instrumentale C qui dépend de la configuration du vecteur d'état, c'est-à-dire du mode de fonctionnement du véhicule, et des capteurs de mesure qui équipent le véhicule.

Reprenant l'exemple pour le mode de fonctionnement LCA, le vecteur $\eta$ de mesure actuelle comporte cinq composantes qui sont la vitesse de lacet $\dot{\psi}$ telle qu'elle est mesurée par le capteur 31, l'angle $\Psi_{rel}$ d'écart relatif tel qu'il est mesuré par l'appareil 15 visant une ligne médiane de la voie de circulation, l'éloignement radial $Y_{CoG}$ du centre de gravité par rapport à la ligne médiane de la voie de circulation tel que cet éloignement est obtenu à partir de l'appareil 15, l'angle $\delta$ de braquage des roues 11 tel qu'il est mesuré par le capteur 46 et l'accumulation $\int Y_{CoG} dt$ au cours du temps de l'opposé de l'éloignement $Y_{CoG}$ du centre de gravité fourni par l'appareil 15. En assimilant la durée dt à la période d'échantillonnage pour chaque instant k, cette pseudo mesure est obtenue par la formule très simple :

$$\left[ \int Y_{CoG} dt \right]_k = \left[ \int Y_{CoG} dt \right]_{k-1} + \left[ Y_{CoG} \right]_k$$

initialisée à zéro.

La relation instrumentale C est approchée dans le module 4 par une matrice numérique $C^c$ pour générer un vecteur $\hat{\eta}$ de mesure estimée à partir du vecteur $\hat{\xi}$ d'état estimé pour le mode de fonctionnement considéré.

Dans le mode de fonctionnement LCA, la matrice numérique $C^c$ a de préférence la forme suivante :

$$C^C = \begin{bmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{bmatrix}$$

Dans laquelle les coefficients non nuls $c_{11}$, $c_{22}$, $c_{34}$, $c_{46}$, $c_{57}$, sont constants et unitaires car les mesures considérées font partie des variables d'état.

Le module 4 calcule alors le vecteur de mesure estimé $\hat{\eta}$ en multipliant en temps réel le vecteur $\hat{\xi}$ d'état estimé par la matrice $C^c$.

Quel que soit le mode de fonctionnement du véhicule, un module 5 de gain d'estimation (parfois nommé gain de Kalman) a pour fonction de corriger la dérivée temporelle $\dot{\hat{\xi}}$ du vecteur d'état pour que le vecteur de mesure estimé $\hat{\eta}$ à partir du vecteur $\hat{\xi}$ d'état estimé coïncide en régime établi avec le vecteur $\eta$ de mesure réelle, de sorte que le vecteur $\hat{\xi}$ d'état estimé coïncide ainsi avec le vecteur $\xi$ d'état physique de suivi de trajectoire du véhicule 1. Pour ce faire, le module 5 ajuste en temps réel la variation temporelle $\dot{\hat{\xi}}$ de vecteur d'état estimé $\hat{\xi}$ de façon à réduire un écart de stabilisation entre le vecteur de mesure actuelle $\eta$ et le vecteur de mesure estimée $\hat{\eta}$ en multipliant l'écart de stabilisation par une matrice de gain d'estimation $L^c$.

L'écart de stabilisation entre les deux vecteurs de mesure $\eta$ et $\hat{\eta}$, étant un vecteur de dimension égale à celle des vecteurs de mesure et la correction à ajouter à la variation temporelle $\dot{\hat{\xi}}$ de vecteur d'état estimé, étant un vecteur de dimension égale à celle des vecteurs d'état, la matrice $L^c$ comporte un nombre de lignes égal au nombre de coordonnées du vecteur d'état et un nombre de colonnes égal au nombre de coordonnées du vecteur de mesure.

Ainsi, le dispositif observateur 2 peut se comporter comme un observateur de Kalman défini par l'équation :

$$\dot{\hat{\xi}} = A^c \hat{\xi} + B^s u_{st} + L^c \eta - C^c \hat{\xi}$$

La matrice $L^c$ correspond à la matrice des gains de l'observateur de Kalman, sans qu'il apparaisse nécessaire ici de développer plus en détail son obtention qui est connue par ailleurs.

L'observateur de Kalman décrit ci-dessus, l'est essentiellement à titre illustratif pour mieux comprendre la mise en œuvre de l'invention mais d'autres observateurs peuvent être utilisés comme par exemple des observateurs à haut gain, des observateurs de type Kalman étendu, les observateurs de Luenberger ou d'autres filtres de type bayésiens pour lesquels l'homme du métier devrait savoir sans peine transposer l'enseignement ici prodigué.

Le dispositif contrôleur 3 génère la commande $u_{st}$ de façon à réduire jusqu'à annuler la différence entre un état de référence $\xi^*$ et le vecteur d'état estimé $\hat{\xi}$ notamment grâce à la dernière variable d'état de type intégrale. Le vecteur d'état de référence étant défini comme un vecteur nul de taille 7x1, la solution proposée pour le contrôleur est exactement l'approche classique dite « retour d'état statique », lequel est défini comme :

$$u_{st} = K \hat{\xi}$$

La matrice K de gain, définie de taille 7x1, contient les gains de contrôle. Au total il y a sept paramètres à régler, chacun associé à une variable d'état différente :

$$K = [K_{\dot{\psi}}, K_{\dot{\psi}_v}, K_{Y_{C\,DC}}, K_{Y_{CDC}}, K_{\dot{\beta}}, K_{\beta}, K_{\rho}]$$

La méthode d'optimisation utilisée est, à titre purement illustratif et non limitatif, la méthode linéaire quadratique (LQR pour Linear-Quadratic Regulator en anglais), basée sur les équations de Ricatti et sur la minimisation de la matrice S de solutions :

$$\dot{S} = AS + SA^T - SBR_k^{-1}B^T S + Q_k$$

$$K = R_k^{-1}B^T S$$

Où ici encore les matrices A et B résultent des équations de la dynamique latérale, $Q_k$ est la matrice des poids de chacune des variables d'état et $R_k$ est la matrice des poids de la commande (en l'occurrence R est fixée à un unique scalaire car il n'y a qu'une seule commande u).

La matrice $Q_k$, qui doit être mise au point, est définie de la manière suivante :

$$Q_k = \begin{bmatrix} q11 & 0 & 0 & 0 & 0 & 0 & 0 \\ 0 & q22 & 0 & 0 & 0 & 0 & 0 \\ 0 & 0 & q33 & 0 & 0 & 0 & 0 \\ 0 & 0 & 0 & q44 & 0 & 0 & 0 \\ 0 & 0 & 0 & 0 & q55 & 0 & 0 \\ 0 & 0 & 0 & 0 & 0 & q66 & 0 \\ 0 & 0 & 0 & 0 & 0 & 0 & q77 \end{bmatrix}$$

La matrice $Q_k$ est supposée diagonale car on considère qu'il n'y a pas de corrélation entre les poids des variables d'état.

On rappelle ici rapidement le principe bien connu de séparation qui gouverne le lien entre l'optimisation de la commande dans le dispositif 3 et celle de l'observateur dans le dispositif 2 qui est très fort car la performance du contrôleur dépend directement de l'estimation de l'observateur, et la synthèse de la commande est faite à partir de la valeur estimée $\hat{\xi}$ par l'observateur.

Pour garantir la stabilité du système bouclé, il convient de vérifier indépendamment la stabilité de l'observateur (A-LC) et la stabilité de la commande en utilisant l'état réel (A+BK). Cette propriété nous permet de garantir que l'optimisation de l'observateur, en d'autres termes l'optimisation de la matrice $L^c$ et l'optimisation de la commande, en d'autres termes l'optimisation de la matrice K de gains, peuvent être faites indépendamment l'une de l'autre tout en garantissant la stabilité du système. Ce principe est connu comme étant *le principe de séparation.*

Cependant, dans des variations de géométrie de voie de circulation à taux élevé comme c'est le cas par exemple sur des routes de montage ou de certaines bifurcations, une optimisation trop rigide peut nuire au confort des passagers ou solliciter le véhicule à l'extrême de ses capacités mécaniques avec pour effet d'accélérer son vieillissement. A l'inverse, une sous-optimisation risque des abords désastreux de virages difficiles ou d'imposer un mode de conduite ennuyeux. De façon à permettre à la fois la meilleure optimisation de la boucle d'asservissement d'état sans nuire au confort des passagers ni solliciter le véhicule à l'extrême de ses capacités mécaniques ou des conditions d'adhérence de la chaussée, le dispositif de contrôle en temps réel de trajectoire comprend un module 7 anticipateur qui ajoute à la première commande $u_{st}$ de braquage produite à partir du module 2 observateur, une deuxième commande $u_{ff}$ de braquage qui est fonction d'une courbure $\gamma_{ff}$ à appliquer à la trajectoire.

Le module 7 comprend un premier sous-module de calcul E qui quantifie la courbure $\gamma_{ff}$ et un deuxième sous-module de calcul E qui quantifie la deuxième commande $u_{ff}$ de braquage.

Le sous-module D de calcul quantifie la deuxième commande $u_{ff}$ de braquage de façon à ce qu'elle soit une solution des équations de la dynamique donnant un vecteur d'état $\xi$ stable ou à dérivée temporelle $\dot{\xi}$ nulle. En d'autres termes, la commande $u_{ff}$ de braquage est générée en faisant abstraction des instabilités de suivi qui, elles sont gérées par le module 2 observateur. Dans les équations liées à la dynamique du véhicule, on considère un état d'équilibre $\xi_{eq}$, une commande $u_{eq}$ de braquage à l'équilibre et on réutilise les matrices $A^c$ et $B^s$ pour modéliser les relations A et B.

$$\vec{0} = A^c \cdot \xi_{eq} + B^s \cdot (u_{eq}, \gamma_{ff})^T$$

Soit en reprenant le même indice pour les variables d'état que pour le vecteur d'état :

$$\begin{pmatrix} 0 \\ 0 \\ 0 \\ 0 \\ 0 \\ 0 \\ 0 \end{pmatrix} = \begin{pmatrix} a_{11}(v) & a_{12} & a_{13}(v) & 0 & 0 & a_{16} & 0 \\ 1 & 0 & 0 & 0 & 0 & 0 & 0 \\ a_{31}(v) & a_{32} & a_{33}(v) & 0 & 0 & a_{36} & 0 \\ 0 & 0 & 1 & 0 & 0 & 0 & 0 \\ 0 & 0 & 0 & 0 & a_{55} & a_{56} & 0 \\ 0 & 0 & 0 & 0 & 1 & 0 & 0 \\ 0 & 0 & 0 & -1 & 0 & 0 & 0 \end{pmatrix} \cdot \begin{pmatrix} \dot{\psi}_{eq} \\ \psi_{rel,eq} \\ \dot{Y}_{CoG,eq} \\ Y_{CoG,eq} \\ \dot{\delta}_{eq} \\ \delta_{eq} \\ \int -Y_{CoG,eq} \end{pmatrix} + \begin{pmatrix} 0 & 0 \\ 0 & -v_a \\ 0 & -v_a^2 \\ 0 & 0 \\ b_{51} & 0 \\ 0 & 0 \\ 0 & 0 \end{pmatrix} \cdot \begin{pmatrix} u_{eq} \\ \gamma_{ff} \end{pmatrix}$$

La cinquième ligne du système donne alors, en combinaison avec la sixième ligne :

$$0 = a_{55}\dot{\delta}_{eq} + a_{56}\delta_{eq} + b_{51}u_{eq} = a_{56}\delta_{eq} + b_{51}u_{eq}$$

Soit en remplaçant les coefficients $a_{56}$ et $b_{51}$ par leur évaluation mécanique paramétrable, $a_{56} = -b_{51} = -\omega^2$:
A l'équilibre, $u_{eq} = \delta_{eq}$.

La première et la troisième ligne du système donnent d'autre part, en combinaison avec la quatrième ligne, puis avec la deuxième ligne :

$$0 = a_{11}(v)\dot{\psi}_{eq} + a_{12}\psi_{rel,eq} + a_{16}\delta_{eq} = a_{11}(v)v\gamma_{ff} + a_{12}\psi_{rel,eq} + a_{16}\delta_{eq}$$

$$0 = a_{31}(v)\dot{\psi}_{eq} + a_{32}\psi_{rel,eq} + a_{36}\delta_{eq} - v^2\rho_{ff} = a_{31}(v)v\gamma_{ff} + a_{32}\psi_{rel,eq} + a_{36}\delta_{eq} - v^2\gamma_{ff}$$

Soit :

$$(a_{12}a_{36} - a_{16}a_{32})\delta_{eq} = (a_{12}v^2 - a_{12}a_{31}(v)v + a_{32}a_{11}(v)v)\gamma_{ff}$$

De sorte que la résolution du système donne :

$$u_{eq} = \frac{(a_{12}v - a_{12}a_{31}(v) + a_{32}a_{11}(v))}{(a_{16}a_{32} - a_{12}a_{36})}v\gamma_{ff}$$

Soit en remplaçant les coefficients des matrices par leur évaluation mécanique paramétrable:

$$u_{eq} = \frac{(C_f l_f - C_r l_r)Mv^2 - (C_f l_f - C_r l_r)^2 I_z + (C_f + C_r)(C_f l_f^2 + C_r l_r^2)}{C_f C_r (l_f + l_r)}\gamma_{ff}$$

On notera que la commande $u_{eq}$ est indépendante de la vitesse $v_a$ du véhicule lorsque les rigidités de dérive des roues arrière et avant sont égales et que le centre de gravité du véhicule est équidistant des axes de roues arrières et avant. Ainsi un véhicule avec une rigidité de dérive $C_f$, $C_r$ identique sur toutes les roues et son centre de gravité équidistant des axes de roues avant et arrière, présenterait l'avantage d'avoir une commande indépendante de sa masse M et de son moment d'inertie $I_z$, calculé au moyen de la formule très simple :

$$u_{eq} = (l_f + l_r)\gamma_{ff}$$

On pourrait directement sommer la commande $u_{ff} = u_{eq} = \delta_{eq}$ avec la commande pour obtenir la commande de braquage $u = u_{eq} + u_{st}$ appliquée aux roues.

Cependant, tenant compte du fait que la modélisation peut ne pas représenter parfaitement fidèlement le comportement réel du véhicule en raison de facteurs éventuellement non pris en compte ou que le ressenti humain peut varier selon le type de passager, une variante intéressante consiste à multiplier la commande $u_{eq}$ par un gain G ajustable au cours d'essais du véhicule et éventuellement modulable en fonction d'un mode de conduite, sportive, familiale ou autre. Le terme gain est à prendre en son sens le plus général qui peut correspondre tant à une augmentation lorsqu'il est supérieur à l'unité qu'à une atténuation dans le cas contraire. On obtient alors :

$$u_{ff} = G \cdot u_{eq}$$

Au vecteur d'état à l'équilibre $\xi_{eq}$ correspond un pseudo vecteur de mesure $\eta_{eq}$ à l'équilibre :

$$\eta_{eq} = \begin{pmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{pmatrix} \cdot \begin{pmatrix} \dot{\psi}_{eq} \\ \psi_{rel,eq} \\ \dot{Y}_{CoG,eq} \\ Y_{CoG,eq} \\ \dot{\delta}_{eq} \\ \delta_{eq} \\ \int -Y_{CoG,eq} \end{pmatrix} = \begin{pmatrix} v \cdot \gamma_{ff} \\ \dfrac{(c_r l_r^2 + c_f l_f^2) \cdot \gamma_{ff} - c_f l_f \delta_{eq}}{c_r l_r - c_f l_f} \\ 0 \\ \delta_{eq} \\ 0 \end{pmatrix}$$

Le pseudo vecteur de mesure $\eta_{eq}$ obtenu dans le sous-module de calcul D est alors soustrait au vecteur de mesure $\eta$ effective de façon à faire porter le module observateur uniquement sur les écarts de trajectoire.

La courbure $\gamma_{ff}$ à appliquer à la trajectoire peut par exemple concerner celle d'un écart à effectuer par le véhicule pour éviter un obstacle ou pour changer de voie. L'exemple préféré de mise en œuvre que nous expliquons à présent concerne une courbure de voie à une distance x en avant du véhicule. Ainsi, le dispositif de contrôle de l'invention peut anticiper l'annonce d'un virage à la manière d'un conducteur qui regarde la route devant le véhicule pour amorcer un virage plutôt que de guider le véhicule comme s'il était sur un rail.

Avantageusement la distance x varie en fonction de la vitesse $v_a$ actuelle du véhicule. A titre purement illustratif et non limitatif, on peut envisager une distance x égale au produit de la vitesse $v_a$ multipliée par un temps de réponse donné à valeur fixe ou à valeur elle-même fonction de la vitesse. Ce temps de réponse peut lui aussi être paramétrable pour permettre de l'ajuster au cours des essais du véhicule.

Le sous-module de calcul E reçoit alors de l'appareil 15 le polynôme y(x) qui donne la géométrie de la ligne directrice de la voie de circulation pour chaque point à la distance x à l'avant du véhicule, généralement sous forme d'un vecteur $(p_0, p_1, p_2, p_3)^T$ dont les coordonnées correspondent aux coefficients du polynôme.

Le sous-module E calcule alors la courbure $\gamma_{ff}$ au moyen de la formule :

$$\gamma_{ff} = \frac{y''(x)}{\left(1 + [y'(x)]^2\right)^{3/2}} \cdot$$

Si le polynôme est de degré 3 comme évoqué ci-dessus, la dérivée première est donnée par la formule simple :

$$y'(x) = 3p_3 x^2 + 2p_2 x + p_1$$

De même, la dérivée seconde est donnée par la formule simple :

$$y''(x) = 6p_3 x + 2p_2$$

La courbure $\gamma_{ff}$ peut ainsi facilement être calculée en temps réel au moyen de la formule :

$$\gamma_{ff} = \frac{6p_3 x + 2p_2}{\left(1 + [3p_3 x^2 + 2p_2 x + p_1]^2\right)^{3/2}}$$

**Revendications**

1. Dispositif de contrôle en temps réel de trajectoire d'un véhicule (1) comprenant un module (2) observateur qui génère en temps réel à partir d'un vecteur de mesure actuelle ($\eta$) un vecteur d'état estimé ($\hat{\xi}$) de suivi de voie du véhicule (1) se déplaçant à une vitesse ($v_a$) actuelle, de façon à produire une première commande ($u_{st}$) de braquage pour stabiliser la trajectoire du véhicule par rapport à ladite voie, **caractérisé en ce qu'**il comprend :

- un module (7) anticipateur qui ajoute à ladite première commande (u$_{st}$) de braquage une deuxième commande (u$_{ff}$) de braquage qui est fonction d'une courbure (γ$_{ff}$) à appliquer à la trajectoire, ladite courbure (γ$_{ff}$) étant égale à l'inverse d'un rayon de courbure de voie à une distance (x) en avant du véhicule.

2. Dispositif de contrôle selon la revendication 1, **caractérisé en ce que** ladite distance (x) varie en fonction de ladite vitesse (v$_a$) actuelle.

3. Dispositif de contrôle selon l'une des revendications précédentes, **caractérisé en ce qu'**il comporte un appareil (15) combinant les propriétés d'une caméra optique et d'un radar pour fournir au moins une géométrie (y(x)) de ligne directrice de la voie sous forme d'un polynôme.

4. Dispositif de contrôle selon la revendication 3, **caractérisé en ce que** le module (7) anticipateur comprend un sous-module (E) de calcul de courbure (γ$_{ff}$) à partir de la géométrie (y(x)) de ligne directrice médiane de la voie au moyen de la formule :

$$\gamma_{ff} = \frac{y''(x)}{\left(1 + [y'(x)]^2\right)^{3/2}} \,.$$

5. Dispositif de contrôle selon l'une des revendications précédentes, **caractérisé en ce que** le module (7) anticipateur comprend un sous-module (D) de calcul de la deuxième commande (u$_{ff}$) de braquage comme solution des équations de la dynamique donnant un vecteur d'état stable ou à dérivée temporelle nulle.

6. Dispositif de contrôle selon la revendication 5, **caractérisé en ce que** le module (7) anticipateur génère un vecteur de mesure évaluée (η$_{eq}$) pour ledit vecteur d'état stable de manière à retirer ledit vecteur de mesure évaluée (η$_{eq}$) dudit vecteur de mesure actuelle (η) en entrée du module (2) observateur.

7. Dispositif de contrôle selon l'une des revendications 5 ou 6, **caractérisé en ce que** le sous-module (D) de calcul comprend de plus un gain ajustable de la deuxième commande (u$_{ff}$) de braquage.

8. Dispositif de contrôle selon l'une des revendications précédentes, **caractérisé en ce que** ledit vecteur de mesure actuelle (η) comprend des coordonnées relatives à une vitesse de lacet ($\dot{\psi}$) et à un angle de braquage (δ) et **en ce que** le vecteur d'état estimé ($\hat{\xi}$) comprend des coordonnées relatives à la vitesse de lacet ($\dot{\psi}$), à un angle d'écart (Ψ$_{rel}$) relatif à une trajectoire du véhicule (1), à une dérivée temporelle d'angle de braquage ($\dot{\delta}$) et à l'angle de braquage (δ).

9. Dispositif de contrôle selon la revendication 8, **caractérisé en ce que** pour se caler sur la voie de chaussée, ledit vecteur de mesure actuelle (η) comprend de plus des coordonnées relatives à l'angle d'écart (Ψ$_{rel}$) relatif à la trajectoire du véhicule (1), à l'écart latéral (Y$_{COG}$) à la trajectoire du véhicule (1) de suivi de voie et à l'opposé de l'intégrale temporelle d'écart latéral ($\int$-Y$_{COG}$dt) à la trajectoire, et **en ce que** le vecteur d'état estimé ($\hat{x}$) comprend de plus des coordonnées relatives à une dérivée temporelle ($\dot{Y}_{COG}$) d'écart latéral à la trajectoire du véhicule (1), à l'écart latéral (Y$_{COG}$) à la trajectoire du véhicule (1), et à l'opposé de l'intégrale temporelle d'écart latéral ($\int$-Y$_{COG}$dt) à la trajectoire.

**Patentansprüche**

1. Vorrichtung zur Steuerung eines Fahrwegs eines Fahrzeugs (1) in Echtzeit umfassend ein Beobachtungsmodul (2), das in Echtzeit ausgehend von einem Vektor einer aktuellen Messung (η) einen Vektors eines geschätzten Spureinhaltungszustands ($\hat{\xi}$) des Fahrzeugs (1) erzeugt, das sich mit einer aktuellen Geschwindigkeit (v$_a$) bewegt, um einen ersten Einschlagbefehl (u$_{st}$) zu erzeugen, um den Fahrweg des Fahrzeugs bezogen auf die Spur zu stabilisieren, **dadurch gekennzeichnet, dass** sie Folgendes umfasst:

- ein Antizipationsmodul (7), das dem ersten Einschlagbefehl (u$_{st}$) einen zweiten Einschlagbefehl (u$_{ff}$) hinzufügt, der von einer Krümmung (γ$_{ff}$) abhängig ist, die auf den Fahrweg anzuwenden ist, wobei die Krümmung (γ$_{ff}$) gleich dem Kehrwert eines Spurkrümmungsradius in einem Abstand (x) vor dem Fahrzeug ist.

**2.** Steuerungsvorrichtung nach Anspruch 1, **dadurch gekennzeichnet, dass** der Abstand (x) in Abhängigkeit von der aktuellen Geschwindigkeit ($v_a$) variiert.

**3.** Steuerungsvorrichtung nach einem der vorhergehenden Ansprüche, **dadurch gekennzeichnet, dass** sie ein Gerät (15) aufweist, das die Eigenschaften einer optischen Kamera und eines Radars kombiniert, um mindestens eine Geometrie (y(x)) einer Leitlinie der Spur in Form eines Polynoms bereitzustellen.

**4.** Steuerungsvorrichtung nach Anspruch 3, **dadurch gekennzeichnet, dass** das Antizipationsmodul (7) ein Untermodul (E) zur Berechnung der Krümmung ($\gamma_{ff}$) ausgehend von der Geometrie (y(x)) der Medianleitlinie der Spur mittels folgender Formel umfasst:

$$\gamma_{ff} = \frac{y''(x)}{(1 + [y'(x)]^2)^{3/2}}$$

**5.** Steuerungsvorrichtung nach einem der vorhergehenden Ansprüche, **dadurch gekennzeichnet, dass** das Antizipationsmodul (7) ein Untermodul (D) zur Berechnung des zweiten Einschlagbefehls ($u_{ff}$) als Lösung der Gleichungen der Dynamik umfasst, die einen Vektor eines stabilen Zustands oder mit Null-Zeitableitung ergibt.

**6.** Steuerungsvorrichtung nach Anspruch 5, **dadurch gekennzeichnet, dass** das Antizipationsmodul (7) einen Vektor einer bewerteten Messung ($\eta_{eq}$) für den Vektor des stabilen Zustands erzeugt, um den Vektor der bewerteten Messung ($\eta_{eq}$) vom Vektor der aktuellen Messung ($\eta$) am Eingang des Beobachtungsmoduls (2) zu entfernen.

**7.** Steuerungsvorrichtung nach einem der Ansprüche 5 oder 6, **dadurch gekennzeichnet, dass** das Berechnungs-Untermodul (D) zusätzlich eine einstellbare Verstärkung des zweiten Einschlagbefehls ($u_{ff}$) umfasst.

**8.** Steuerungsvorrichtung nach einem der vorhergehenden Ansprüche, **dadurch gekennzeichnet, dass** der Vektor der aktuellen Messung ($\eta$) Koordinaten in Bezug auf eine Giergeschwindigkeit ($\dot{\psi}$) und auf einen Einschlagwinkel ($\delta$) umfasst, und dadurch, dass der Vektor des geschätzten Zustands ($\hat{\xi}$) Koordinaten in Bezug auf die Gierge-schwindigkeit ($\dot{\psi}$), auf einen Abweichungswinkel ($\Psi_{rel}$) in Bezug auf einen Fahrweg des Fahrzeugs (1), auf eine Zeitableitung des Einschlagwinkels ($\dot{\delta}$) und auf den Einschlagwinkel ($\delta$) umfasst.

**9.** Steuerungsvorrichtung nach Anspruch 8, **dadurch gekennzeichnet, dass** zur Abstimmung auf die Straßenspur der Vektor der aktuellen Messung ($\eta$) zusätzlich Koordinaten in Bezug auf den Abweichungswinkel ($\Psi_{rel}$) in Bezug auf den Fahrweg des Fahrzeugs (1), auf die Spureinhaltungs-Seitenabweichung ($Y_{COG}$) zum Fahrweg des Fahrzeugs (1) und auf die Gegenzahl der Zeitableitung der Seitenabweichung ($\int -Y_{COG} dt$) zum Fahrweg umfasst, und dadurch, dass der Vektor des geschätzten Zustands ($\hat{x}$) zusätzlich Koordinaten in Bezug auf eine Zeitableitung ($\dot{Y}_{COG}$) der Seitenabweichung zum Fahrweg des Fahrzeugs (1), auf die Seitenabweichung ($Y_{COG}$) zum Fahrweg des Fahrzeugs (1) und auf die Gegenzahl der Zeitableitung der Seitenabweichung ($\int -Y_{COG} dt$) zum Fahrweg umfasst.

**Claims**

**1.** Device for controlling in real time the path of a vehicle (1) comprising an observer module (2) which generates, in real time from a current measurement vector ($\eta$), an estimated lane-keeping state vector ($\hat{\xi}$) of the vehicle (1) moving at a current speed ($v_a$), so as to produce a first steering lock command ($u_{st}$) to stabilize the path of the vehicle relative to said lane, **characterized in that** it comprises:

    - an anticipator module (7) which adds to said first steering lock command ($u_{st}$) a second steering lock command ($u_{ff}$) which is a function of a curvature ($\gamma_{ff}$) to be applied to the path, said curvature ($\gamma_{ff}$) being equal to the inverse of a radius of lane curvature at a distance (x) in front of the vehicle.

**2.** Control device according to Claim 1, **characterized in that** said distance (x) varies as a function of said current speed ($v_a$).

**3.** Control device according to eitherp of the preceding claims, **characterized in that** it comprises a unit (15) combining the properties of an optical camera and of a radar to supply at least one guideline geometry (y(x)) of the lane in the form of a polynomial.

4. Control device according to Claim 3, **characterized in that** the anticipator module (7) comprises a submodule (E) for computation of curvature ($\gamma_{ff}$) from the median guideline geometry (y(x)) of the lane by means of the formula:

$$\gamma_{ff} = \frac{y''(x)}{\left(1 + [y'(x)]^2\right)^{3/2}}.$$

5. Control device according to one of the preceding claims, **characterized in that** the anticipator module (7) comprises a submodule (D) for computation of the second steering lock command ($u_{ff}$) as the solution of the equations of the dynamic giving a state vector that is stable or has zero time derivative.

6. Control device according to Claim 5, **characterized in that** the anticipator module (7) generates an evaluated measurement vector ($\eta_{eq}$) for said stable state vector so as to remove said evaluated measurement vector ($\eta_{eq}$) from said current measurement vector ($\eta$) as input for the observer module (2).

7. Control device according to one of Claims 5 and 6, **characterized in that** the computation submodule (D) also comprises an adjustable gain of the second steering lock command ($u_{ff}$).

8. Control device according to one of the preceding claims, **characterized in that** said current measurement vector ($\eta$) comprises coordinates relating to a yaw speed ($\dot{\Psi}$) and to a steering lock angle ($\delta$) and **in that** the estimated state vector ($\hat{\xi}$) comprises coordinates relating to the yaw speed ($\Psi$), to an angle of deviation ($\Psi_{rel}$) relative to a path of the vehicle (1), to a steering lock angle time derivative ($\dot{\delta}$) and to the steering lock angle ($\delta$).

9. Control device according to Claim 8, **characterized in that**, to be aligned on the roadway lane, said current measurement vector ($\eta$) also comprises coordinates relating to the angle of deviation ($\Psi_{rel}$) relative to the path of the vehicle (1), to the lateral deviation ($Y_{COG}$) from the lane-keeping path of the vehicle (1) and to the opposite of the time integral of lateral deviation ($\int -Y_{COG}dt$) from the path, and **in that** the estimated state vector ($\hat{x}$) also comprises coordinates relating to a time derivative ($\dot{Y}_{COG}$) of lateral deviation from the path of the vehicle (1), to the lateral deviation ($Y_{COG}$) from the path of the vehicle (1), and to the opposite of the time integral of lateral deviation ($\int -Y_{COG}dt$) from the path.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1074903 B1
- US 8751089 B2
- WO 2014006327 A
- FR 2925005
- WO 2012084465 A
- FR 1255068
- FR 1255188
- FR 12563339